Europäisches Patentamt

(19) European Patent Office

Office européen des brevets

(11) Numéro de publication : **0 314 539 B1**

(12) **FASCICULE DE BREVET EUROPEEN**

(45) Date de publication du fascicule du brevet :
24.04.91 Bulletin 91/17

(51) Int. Cl.⁵ : **F16F 1/36,** B60G 25/00

(21) Numéro de dépôt : **88402558.6**

(22) Date de dépôt : **11.10.88**

(54) **Cale élastique à rigidité bloquée dans une direction par la tension d'un câble noyé dans l'élastomère.**

(30) Priorité : 28.10.87 FR 8714897

(43) Date de publication de la demande :
03.05.89 Bulletin 89/18

(45) Mention de la délivrance du brevet :
24.04.91 Bulletin 91/17

(84) Etats contractants désignés :
AT BE CH DE ES FR GB GR IT LI LU NL SE

(56) Documents cités :
DE-A- 1 103 773
FR-A- 898 055

(56) Documents cités :
FR-A- 2 340 834
FR-A- 2 453 746
FR-A- 2 509 000
GB-A- 901 454

(73) Titulaire : CAOUTCHOUC MANUFACTURE ET
PLASTIQUES
143bis, rue Yves le Coz
F-78005 Versailles (FR)

(72) Inventeur : De Fontenay, Etienne
4, route de Moulins
F-58300 Decize (FR)
Inventeur : Parisot, Patrick
24 Place de Beaume
F-78990 Elancourt (FR)

Jouve, 18, rue Saint-Denis, 75001 PARIS

## Description

L'invention est du domaine des isolations antivibratoires, plus précisément des pièces élastiques utilisées dans ce but sur véhicules automobiles et dans lesquelles une grande flexibilité statique et dynamique de ces laisons élastiques entre en conflit avec les forces permanentes ou temporaires exercées notamment entre le chassis et les éléments de guidage de la suspension ou liaison au sol.

Une première famille d'artifices couramment utilisés pour résoudre cette difficulté consiste à assurer un bon filtrage des vibrations en position médiane au moyen de blocs de caoutchouc adhérisés, ou tout au moins plaqués par précontrainte, contre des armatures de fixation d'une part au chassis, d'autre part à l'ensemble à isoler tel qu'une traverse portant le train arrière du véhicule. Les efforts extrêmes, ou dépassant une certaine valeur, sont transmis par appui des parois latérales normalement libres sur un boitier rigide, généralement métallique, enfermant la pièce déformable, et servant ainsi de butée de limitation de course. La progressivité de cet appui règle le passage de la zone très filtrante, avant déformation, à la zone nécessairement dix à cinquante fois plus rigide, lorsque s'exercent des efforts soit longitudinaux en freinage, soit transversaux en guidage latéral, l'objectif étant de ne pas dépasser quelques millimètres entre les deux situations pour ne pas introduire d'instabilité dans le guidage du véhicule. Un exemple serait d'assurer des rigidités de 15 ou 25 daN par mm et des efforts de butée atteignant 250 ou 300 daN sans courses prohibitives. Le principe de ces applications est décrit dans le brevet français FR-A-898.055 de GETEFO.

Une seconde famille de dispositifs est utilisée, notamment comme bielle anticouple d'un groupe motopropulseur, en reliant le corps d'une bielle où est adhérisé ou emmanché un bloc d'élastomère formant articulation élastique autour d'une douille, mais en ménageant dans ce bloc des lacunes ou alvéoles. Lorsque des efforts, en couple moteur par exemple, modérés, s'exercent, le facteur de forme, c'est à dire le rapport de la surface libre de l'élastomère à sa surface bloquée sur chaque armature rigide, permet une grande déformabilité à raideur faible. Au contraire, dès la fermeture des alvéoles par plaquage des surfaces libres, une rigidité élevée est obtenue à travers des couches élastiques efficacement enfermées, en bénéficiant de la quasi-incompressibilité volumétrique des caoutchoucs.

Un exemple de ces montages est donné par le brevet FR-A-2.453.746 de General Motors Co.

Un troisième moyen d'exercer des rigidités élevées dans une direction privilégiée unique est de bloquer la déformabilité par un appui rigide dans cette direction, avec l'inconvénient de limiter notablement le filtrage antivibratoire au moins dans cette direction.

Un brevet de H.D.Munson GB-A-901.454 décrit de telles butées solides, en appui sur les plaques de fixation d'un sandwich de caoutchouc, le débattement dans les directions latérales étant permis par des bouts sphériques roulant sur leurs appuis. Bien entendu, lorsque s'exercent des efforts importants, le filtrage élastique est notablement court-circuité par les deux contacts solides, malgré une surface d'appui restreinte mais ayant la rigidité du métal dans le sens comprimé.

L'objet de la présente invention est d'apporter, dans des conditions analogues à ce dernier dispositif, une grande anisotropie des rigidités en assurant un filtrage antivibratoire par le principe du sandwich de caoutchouc adhérisé à des plaques métalliques, antérieurement connu, et en assurant le blocage dans une direction unique par un moyen nouveau constitué d'un câble tendu, noyé dans l'élastomère.

L'homme de l'art dans l'industrie du caoutchouc qui utilise des câbles métalliques adhérisés intimement au caoutchouc, par un traitement chimique ou électrolytique approprié tel que le laitonnage des fils d'acier constituant les torons, connaît la différence de raideur entre un câble métallique nu, où la tension vient rapidement bloquer les spires enroulées en hélice d'un élément présentant le module d'élasticité de l'acier, et le même câble bien imprégné jusqu'à l'âme par le caoutchouc. La couche de gomme infiltrée empêchant le contact des fils métalliques, – et d'ailleurs, en épreuve de fatigue alternée, éloignant l'apparition du phénomène de "fretting-corrosion" –, est sollicitée dès le début de la tension du câble ; par la multiplicité des couches, elle constitue un filtre antivibratoire – de grande raideur de par les facteurs de forme sans surface libre – mais bien plus efficace qu'un câble nu simplement tendu.

L'invention consiste donc dans une cale élastique, notamment utilisable pour la fixation antivibratoire des éléments de suspension sur un chassis de véhicule automobile, qui exerce sur ladite cale une charge permanente de compression et des efforts occasionnels importants dans les directions horizontales, dépassant la valeur de ladite charge dans une direction privilégiée. L'invention est caractérisée en ce que la rigidité de déformation de l'élastomère est bloquée dans une direction unique, sensiblement parallèle à ses armatures de fixation, par la tension d'un câble métallique noyé dans l'élastomère qui le pénètre et est rendu solidaire, par des embouts, de chaque armature de fixation.

L'invention et ses variantes seront mieux comprises à la lecture de la description accompagnant les dessins, dans lesquels :
– la figure 1 est une coupe axiale d'une disposition de cale élastique selon l'invention.
– la figure 2 est une variante de réalisation du même dispositif.

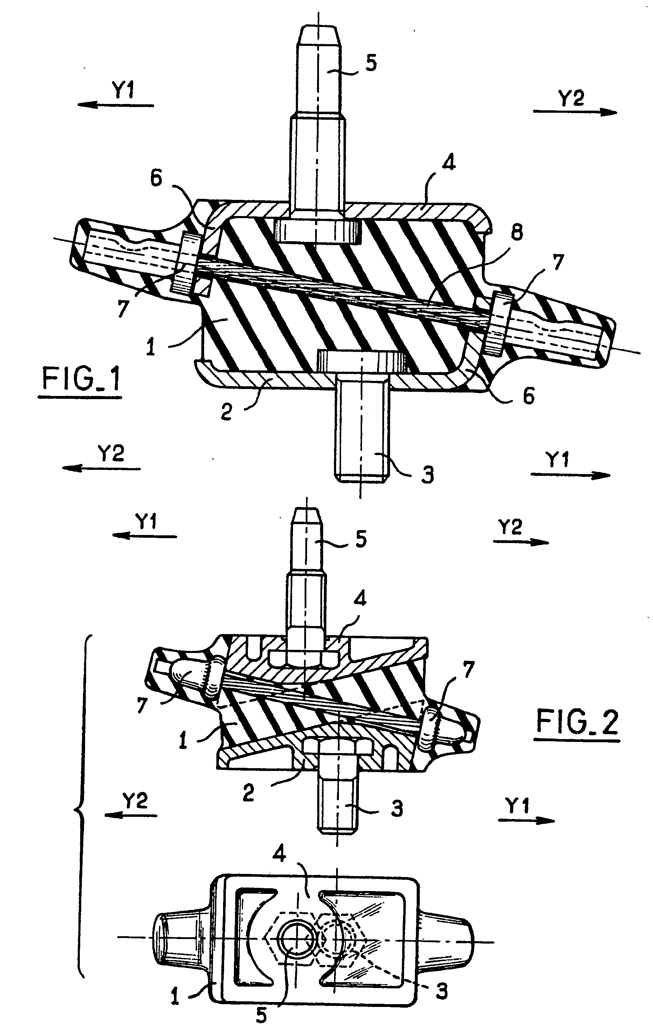

La figure 1 est une coupe axiale d'une cale élas-

2

tique selon l'invention. Dans l'application en support de traverse portant le train arrière d'une automobile, le plan de coupe est transversal au véhicule et la tension du câble supporte les efforts latéraux de guidage par les roues.

Une charge permanente de compression s'exerce sur le bloc de gomme parallélépipédique (1) en composition élastomérique à caractéristiques dynamiques élevées et, préférentiellement, de basse dureté.

Une liaison intime, a cours de la vulcanisation, aux armatures planes assure un facteur de forme tel que la rigidité dépasse 75 ou 80 daN par millimètre en compression pure, pour l'exemple représenté, malgré des déformabilités latérales, par exemple de 15 daN/mm.

L'armature inférieure (2) à laquelle est incorporée une vis (3) assure la fixation à la traverse arrière de laquelle sont solidaires des bras de suspension longitudinaux. L'armature supérieure (4), solidaire d'une vis (5), sert à la fixation au chassis arrière,qui est le plus souvent une caisse autoportante. Les ressorts de suspension ayant le plus généralement un bras de levier plus court que celui de fixation du moyeu, une réaction permanente de compression rapproche légèrement les armatures (2) et (4). Le couple de freinage exercé par les bras de suspension va dans le sens accroissant cet effort. La contrainte longitudinale résultant du freinage est équilibrée par un montage en légère inclinaison de la pièce. Une équerre (6), identique sur chaque armature et percée d'un trou, vient recevoir la butée d'un embout (7), serti à chaque extrémité d'une longueur de câble métallique (8), sensiblement parallèle aux armatures.

En l'absence d'efforts transversaux dans la direction (Y1), le câble non tendu permettrait tous les débattements vibratoires entre les armatures (2) et (4), avec le rappel élastique dû au bloc d'élastomère (1).

En cas d'efforts transversaux dans la direction (Y1), le câble se tend et vient prendre appui par les embouts (7) sur le siège ménagé dans l'équerre (6), à travers la mince pellicule de gomme où l'un et l'autre sont noyés.

Un filtrage suffisant est assuré du fait de la traversée de ces couches élastomériques et du caractère non rectiligne des torons de câble, dont la déformation vibratoire prend appui sur de multiples interfaces, entre acier et composition élastomérique de bas module, bloquée par son incompressibilité volumétrique, mais de vitesse de transmission du son très différente de celle de l'acier.

Dans le cas de sollicitations opposées, dans la direction (Y2), en n'oubliant pas que la plus grande partie de la force transversale passe par le dispositif symétrique, le câble se trouve détendu et les couches minces abaissent considérablement leur rigidité apparente dans la zone voisine des contraintes nulles, sans toutefois passer en rigidité de traction, car la déformation se trouve limitée par le blocage du dispositif opposé. En cas de déformations perpendiculaires à la direction du câble, en longitudinal sur véhicule, la flexion des câbles noyés dans la gomme se produit sans perturber la rigidité de cisaillement du bloc (1) avant plusieurs millimètres.

La figure (2) représente une variante du dispositif où les armatures (2) et (4) sont réalisées par moulage d'alliage d'aluminium, le fonctionnement étant totalement inchangé par rapport à la description de la figure 1. La solidarisation des embouts (7) sur ces deux extrémités de câble peut s'effectuer soit par écrasement d'un embout tubulaire, soit par surmoulage d'un alliage de zamac suivant le principe "câble de frein de vélo" sans que le fonctionnement en soit modifié. L'air inclu entre les torons du câble métallique (8) est chassé, lors de l'introduction de la composition élastomérique, sous forte pression, dans le moule, en suivant les canaux, aussi écrasés soient-ils, ménagés dans les deux embouts (7) et sort du moule par les excroissances entourant lesdits embouts, afin d'assurer la meilleure adhérence possible de la gomme avec le câble et l'étanchéité aux intempéries, la pièce étant particulièrement exposée, dans un train arrière.

En résumé, une pièce d'apparence très simple, quasi parallélépipédique, et de fixation élémentaire facilement automatisable, assure la fonction antérieurement assurée par plusieurs surfaces dont les interstices étaient particulièrement favorables aux accumulations de poussières et oxydations locales. L'ensemble s'en trouve nettement allégé tout en permettant un contrôle plus précis de la géométrie d'un train arrière, par exemple.

L'homme de l'art peut bien entendu étendre les applications du dispositif objet de l'invention données à titre d'exemples non limitatifs et utiliser ledit dispositif à d'autres fonctions, tels le train avant ou la fixation anticouple d'un groupe motopropulseur, utilisant les mêmes propriétés d'anisotropie des rigidités statiques et dynamiques, sans sortir du cadre de l'invention.

**Revendications**

1. Cale élastique formée d'une composition élastomérique (1) vulcanisée, adhérisée à deux armatures de fixation sensiblement planes (2) et (4), utilisée pour l'isolation antivibratoire des éléments de suspension sur un chassis de véhicule automobile, ledit chassis exerçant sur ladite cale une charge permanente de compression suivant une direction verticale et des efforts occasionnels importants dans les directions horizontales, dépassant la valeur de ladite charge dans une direction privilégiée, caractérisée en ce que la rigidité de déformation de la composition élastomérique (1) est bloquée dans une direction unique, sensiblement parallèle aux plans des armatures de fixation (2) et (4), par la tension d'un câble métallique (8), noyé dans ladite composition élastomérique (1) qui le pénètre, et fixé par des embouts (7), eux-mêmes intimement liés par l'adhérence de ladite composition élastomérique (1) à une équerre (6), de direction sensiblement perpendiculaire à la face principale desdites armatures (2) et (4).

2. Cale élastique selon la revendication 1 caractérisée en ce que les embouts (7) du câble métallique (8) sont réalisés par sertissage d'un embout tubulaire entourant l'extrémité dudit câble métallique (8).

3. Cale élastique selon la revendication 1 caractérisée en ce que les embouts (7) du câble métallique (8) sont réalisés par surmoulage d'un alliage de zamac sur l'extrémité coupée dudit câble métallique (8).

## Ansprüche

1. Elastische Unterlage aus einem vulkanisierten Elastomergemisch (1) das mit zwei im wesentlichen ebenen Befestigungsbeschlägen (2 und 4) verklebt ist, zur Schwingungsdämpfung von Aufhängungselementen auf einem Fahrgestell eines Kraftfahrzeuges, wobei dieses Fahrgestell auf die Unterlage in vertikaler Richtung eine dauerhafte Druckbelastung und in horizontalen Richtungen gelegentliche stare Kräfte ausübt, die den Wert der besagten Belastung in einer bevorzugten Richtung übersteigen, dadurch gekennzeichnet, daß die Verformungssteifigkeit des Elastomergemischs (1) in einer zu den Ebenen der Befestigungsbeschläge (2 und 4) im wesentlichen parallelen einzigen Richtung blockiert ist durch die Spannung eines Metallkabels (8), das in dem Elastomergemisch (1), das es durchdringt eingebettet und durch Pressungen (7) befestigt ist, die ihrerseits durch die Haftwirkung des Elastomergemischs (1) mit einem Anschlagwinkel (6) eng verbunden sind, der zu der Hauptfläche der besagten Befestigungsbeschläge (2 und 4) im wesentlichen rechtwinklig ist.

2. Elastische Unterlage nach Anspruch 1, dadurch gekennzeichnet, daß die Pressungen (7) des Metallkabels (8) durch Quetschen einer Preßhülse gebildet sind, die das Ende des besagten Metallkabels (8) umgibt.

3. Elastische Unterlage nach Anspruch 1, dadurch gekennzeichnet, daß die Pressungen (7) des Metallkabels (8) durch Angießen einer Zamaclegierung auf die Schnittfläche des besagten Metallkabels (8) gebildet sind.

## Claims

1. A resilient packing comprising a vulcanised elastomeric composition (1) bonded to two substantially plane fastening fittings (2) and (4), utilized for the antivibrational insulation of the suspension elements on a self-propelled vehicle chassis, the said chassis exerting on the said packing a constant compressive load in a vertical direction and occasional substantial stresses in the horizontal directions, exceeding the value of the said load in a preferential direction, characterised in that the deformation rigidity of the elastomeric composition (1) is blocked in a single direction substantially parallel to the planes of the fastening fittings (2) and (4) by the tension of a metal cable (8) embedded in the said elastomeric composition (1) which penetrates it and secured by end-pieces (7), which are themselves intimately bonded by the adhesion of the said elastomeric composition (1), to an angle piece (6) directed substantially at right angles to the main surface of the said fittings (2) and (4).

2. A resilient packing according to claim 1, characterised in that the end-pieces (7) of the metal cable (8) are produced by crimping a tubular end piece surrounding the end of the said metal cable (8).

3. A resilient packing according to claim 1, characterised in that the end-pieces (7) of the metal cable (8) are produced by the overmoulding of a Zamak alloy on to the cut end of the said metal cable (8).

FIG._1

FIG._2